# EUROPÄISCHE PATENTANMELDUNG

(11) **EP 2 098 815 A2**
(43) Veröffentlichungstag der Anmeldung: **09.09.2009**
(21) Anmeldenummer: 09001567.8
(22) Anmeldetag: 05.02.2009
(51) Int. Cl.: F41H 7/04, F41H 5/013

(54) **Panzerung für ein Fahrzeug**

(30) Priorität: 05.03.2008 DE 102008012720
(71) Anmelder: Benteler Automobiltechnik GmbH, 33102 Paderborn (DE)
(72) Erfinder: Müller, Markus, 33102 Paderborn (DE); Borchert, Ulrich, 85402 Kranzberg (DE); Klasfauseweh, Udo, Dr., 33334 Gütersloh (DE)

(57) **Zusammenfassung**

Es wird vorgeschlagen, eine Panzerung für ein Fahrzeug aus mindestens zwei separaten zumindest abschnittsweise identisch konfigurierten Blechen oder Blechformteilen (1, 2) aus Panzerstahl aufzubauen, indem beide Bleche oder Blechformteile (1, 2) in kongruenter Zuordnung hintereinander gelegt werden.

## Beschreibung

Die Erfindung beschreibt eine Panzerung für ein Fahrzeug.

Fahrzeuge werden derzeit gegen Beschuss mit Bauteilen aus Stahl gepanzert (ballistischer Schutz), indem zunächst eine spezielle Panzerstahlsorte ausgewählt wird. Panzerstähle sind niedrig legierte Vergütungsstähle mit einer hohen Härte. In Abhängigkeit von der Vergütung des Stahls lässt sich entweder eine hohe Festigkeit des Stahls auf Kosten der Duktilität oder eine zum Energieverzehr hinreichende Duktilität bei allerdings verringerter Härte einstellen. Da eine Stahlpanzerung durch die hohe Dichte ein sehr hohes Flächengewicht aufweist, soll die Wanddicke des Materials für die jeweilige Beschussanforderung möglichst gering gehalten werden.

Stand der Technik ist der Einsatz von homogenen Panzerstahlblechen. Herkömmliche Panzerstahlbleche lassen sich aber nur bedingt und mit geringfügigen Formänderungen spanlos bearbeiten, insbesondere biegen (bis max. 4°), ohne zu brechen oder Oberflächenrisse zu zeigen. Aufgrund dieser Probleme wird eine Panzerung in der Regel aus vielen kleinen Platten aufgebaut, die miteinander verschweißt werden, um eine komplexe Form abzubilden. Beim Schweißen der Panzerstahlwerkstoffe sinkt die Härte im Bereich der Wärmeeinflusszone stark ab. Um dennoch den Schutz gegen Geschosse durch die Panzerung zu gewährleisten, werden zum Beispiel weitere Panzerstahlplatten im Bereich der Schweißnähte überlappend angeordnet. Alternativ werden die Schweißnähte beispielsweise rückseitig mit Aramidlayern hinterlegt. Der Einbau einer von außen nicht sichtbaren Panzerung ist deswegen insgesamt bauraumintensiv.

Die DE 10 2005 014 298 A1 offenbart daher ein Verfahren zum Panzern eines Fahrzeugs mit einem Bauteil aus gehärtetem Stahl, wobei zur Herstellung des Bauteils zunächst eine Platine aus ungehärtetem Panzerstahl mit einer Blechdicke von 4 bis 15 mm bereitgestellt wird, das Bauteil vor der Endformgebung auf eine Temperatur über den AC₃ Punkt der Legierung erhitzt wird, das über AC₃ erhitzte Bauteil in einem Pressenwerkzeug in die Endform gebracht und gleichzeitig unter Verbleib in dem Pressenwerkzeug gehärtet wird (Warmformen und Werkzeughärten) und das Bauteil ohne einen weiteren Umformschritt in das Fahrzeug zur Panzerung eingebaut wird. Auf diese Weise lassen sich großflächige einteilige Panzerungsbauteile mit einer gleichbleibenden Wanddicke herstellen.

Auch die DE 10 2004 006 093 B3 beschreibt ein Verfahren zur Herstellung eines dreidimensional geformten Panzerungsbauteils für Fahrzeugkarosserien durch Herstellen von Blechformteilen aus härtbarem Stahl unter thermischer Vorbehandlung dieser Stahlplatinen, wobei die Aufheizgeschwindigkeit und -temperatur wenigstens bis zum Erreichen des legierungsgehaltsabhängigen austenitischen oder teilaustenitischen Zustands gewählt werden, und darauf folgender Pressformgebung und gegebenenfalls anschließender Härte- bzw. Wärmebehandlung der geformten Panzerungsbauteile. Erfindungsgemäß wird das Warmumformen und das Abschreckhärten der Stahlplatinen in einem Arbeitsgang durchgeführt, die austenitisierte Stahlplatine innerhalb einer Zeit von maximal 90 Sekunden mittels Presswerkzeug umgeformt und das umgeformte Bauteil in vollflächigem Kontakt mit dem Presswerkzeug gehalten. Die Abkühlung des umgeformten Bauteils erfolgt im geschlossenen Presswerkzeug und zwar mit einer Abkühlgeschwindigkeit, die wenigstens der materialspezifischen kritischen Abkühlgeschwindigkeit entspricht. Auch hier erzielt man einteilige Panzerungsbauteile mit einer gleichbleibenden Wanddicke.

Neben dem Einsatz homogener Panzerstahlbleche ist auch noch der Einsatz von Multilagen Stählen bekannt, wobei die Lagen miteinander stoffschlüssig verbunden sind. Solche Multilagen Stähle sind aufgrund des komplexen Herstellungsprozesses teuer. In der Regel werden die Multilagen Stähle durch Verwalzen oder Sprengplattieren angefertigt und lassen sich im Übrigen nur schwer formen. Ebenfalls zum Stand der Technik zählt der Einsatz von Werkstoffkombinationen aus Keramik und Faserverbundplatten, Stahl und Faserverbundplatten sowie Keramik und Stahl.

Die erforderliche Wanddicke eines Blechformteils richtet sich bei einer vorgegebenen Beschussklasse auch nach der Bauteilform, der Einbaulage und dem möglichen Aufprallwinkel eines Projektils. Insbesondere bei Radien oder Biegungen zeigt der ballistische Schutz ein im Vergleich zu ebenen Flächen abweichendes Verhalten. Bei gleichbleibender Blechstärke kommt es aufgrund der geometrischen Form zu einer Schwächung gegen Beschuss. Beispielsweise kann es zu Durchschüssen oder Rissen kommen. In den Radien ist die Blechstärke daher zu gering und deswegen unterdimensioniert. Folglich muss die Wandstärke des gesamten Panzerungsteils homogen auf die zu erzielende Schutzwirkung in den schwächsten Bereichen ausgelegt werden, um Durchschüsse oder Risse zu vermeiden. Dadurch ist das Formbauteil in den anderen Bereichen jedoch für die zu erzielende Schutzwirkung zu dick und damit überdimensioniert und insgesamt zu schwer und zu teuer.

Alternativ werden Panzerungen in Radien, Biegungen oder anderen stärker beanspruchten Bereichen extra verstärkt. Dies kann beispielsweise durch sogenannte Backings geschehen. Backings sind aus nichtmetallischen Werkstoffen aufgebaute, im Regelfall durch Kleben aufgebrachte Verstärkungen. Die Unsicherheit der zuverlässigen adhesiven Wirkung des Klebstoffes insbesondere unter Zeiteinwirkung, das Auftreten von Bauteilkorrosion und die passgenaue Fixierung der Backings sind problematisch. Hinzu kommen die Herstellungskosten der Backings.

Die DE 100 49 660 B4 beschreibt das Warmformen eines Patchworkbleches, und zwar ein Verfahren zum Herstellen eines räumlich geformten, aus einem Basisblech und aus wenigstens einem kleineren, lokal angeordneten Verstärkungsblech bestehenden Strukturbauteils, bei dem das Basisblech des Strukturteils im Flachzustand oder in einem unvollständig umgeformten Vorformungszustand mit einem Verstärkungsblech an der für die spätere Verstärkungsstelle vorbestimmten Stelle verbunden und die Teile des gepatchten Verbundblechs anschließend mittels eines öffen- und schließbaren Umformwerkzeugs in einer Umformpresse gemeinsam umgeformt werden. Das gepatchte Verbundblech wird vor dem gemeinsamen Umformen auf eine oberhalb der Umformtemperatur des Werkstoffs liegende Temperatur erwärmt, im Warmzustand in die gewünschte Form umgeformt und anschließend unter mechanischer Fixierung des gewünschten Umformzustandes in dem geschlossen gehaltenen Umformwerkzeug oder einem anschließenden Fixierwerkzeug abgekühlt. Diese Schrift bezieht sich jedoch nicht auf die spezielle Problematik von Panzerungsbauteilen.

Die DE 10 2004 055 100 A1 offenbart eine Achskonstruktion für ein Kraftfahrzeug in Schalenbauweise, wobei die Längsträger und der Querträger aus zwei identisch konfigurierten Schalen aus Metall gebildet sind, die in kongruenter Zuordnung zumindest abschnittsweise miteinander verklebt sind. Hierbei geht es darum, unter Beibehaltung der Steifigkeit und Festigkeit das Bauteilgewicht und die Bauteilkosten zu verringern. Die Achse wird durch dynamische Kräfte belastet. Dementsprechend soll über die Länge der Abschnitte aus Kleber und ihre Platzierung im Längsverlauf der Längsträger und des Querträgers die Biege- und Verwindungssteifigkeit gezielt beeinflusst werden. Die Anmeldung beschäftigt sich nicht mit Panzerungsbauteilen und deren speziellen Anforderungen.

Die DE 10 2004 055 117 B3 zeigt einen Querlenker für eine Fahrzeugachse, der aus zwei identisch konfigurierten Schalen aus Metall besteht, die in kongruenter Zuordnung ineinander gelegt und durch eine mindestens abschnittsweise eingebrachte Verklebung miteinander gefügt sind. Auch der Querlenker wird als Teil einer Achskonstruktion mit dynamischen Kräften belastet. Dementsprechend soll durch den sandwichartigen Aufbau ein hohes Trägheitsmoment bei hoher Bauteilsteifigkeit realisiert werden. Die Anmeldung beschäftigt sich nicht mit Panzerungsbauteilen.

Ausgehend von diesem Stand der Technik ist es Aufgabe der Erfindung, die Wanddicke einer Panzerung aus Stahl und damit das Flächengewicht im Verhältnis zur Beschusssicherheit zu optimieren.

Diese Aufgabe löst die Erfindung mit den Merkmalen von Anspruch 1. Demnach besteht die Panzerung für ein Fahrzeug aus mindestens zwei separaten zumindest abschnittsweise identisch konfigurierten Blechen oder Blechformteilen aus Panzerstahl, die in kongruenter Zuordnung hintereinander gelegt sind. Hierbei handelt es sich um eine Kombination von zwei oder mehreren Blechen oder Blechformteilen, die als Gleichteile oder Doppler ausgebildet sind. Im Gegensatz zu aus dem Stand der Technik bekannten zwei- Lagen- Stählen werden die erfindungsgemäßen Bleche oder Blechformteile nicht bereits im Stahlwerk miteinander stoffschlüssig verbunden, sondern für den jeweiligen Einsatzzweck angepasst separat bereitgestellt und erst zu einem späteren Zeitpunkt gegebenenfalls miteinander gefügt. Im Gegensatz zu einer herkömmlichen aus kleinen Stücken zusammengeschweißten und sich teilweise überlappenden Panzerung sind die erfindungsgemäßen Bleche oder Blechformteile im sich überdeckenden Bereich identisch konfiguriert und in kongruenter Zuordnung hintereinander gelegt. Um unnötige Wiederholungen zu vermeiden schließt die Bezeichnung Blechformteil im nachfolgenden Text auch geringe oder keine Verformungsgrade aufweisende Panzerstahlbleche ein.

Das vordere und das hintere Blechformteil können exakt gleichgroß ausgebildet sein, es ist aber auch möglich, dass das vordere Blechformteil nur einen Teil des hinteren Blechformteils überdeckt, und zwar den Teil, wo ein erhöhter Schutz vor Geschossen im Verhältnis zum nicht überdeckten Teil bestehen muss. Auch wenn beide Blechformteile exakt gleichgroß ausgebildet sind und übereinander liegen, kann trotzdem das Flächengewicht gegenüber einer homogenen Panzerung aus derselben Stahlsorte reduziert werden.

Addiert man die Blechdicke der hintereinander liegenden Blechformteile, so ist die Gesamtwanddicke beider Teile immer noch kleiner als die Wanddicke einer homogenen Panzerung, die die gleiche Beschusssicherheit aufweist. Dadurch sinkt das benötigte Flächengewicht. Das erste Blechformteil wirkt wie ein Schott. Trifft ein Geschoss auf das vordere Blechformteil auf, kommt es in dem ersten Blechformteil zu Gefügeumwandlungen des Stahls in den Scherzonen am Rand der Auftreffzone des Projektils. Durch die entstehende Wärme kann sich der Martensit in diesen Bereichen wieder in Austenit umwandeln, was eine lokale Schwächung des Stahls verursacht. Es kann zu einem Durchschuss durch das erste Blechformteil kommen. Gleichzeitig ist das Projektil aber so vorgeschädigt, dass das zweite Blechformteil die Geschossreste aufhält. Zudem sind beide Blechformteile zueinander isoliert, so dass eine Gefügeumwandlung des Stahls im zweiten Blechformteil nicht mehr oder nur noch eingeschränkt auftritt.

Beide Blechformteile können aus demselben Panzerstahl bestehen. Zum Beispiel weist ein Blechformteil A aus einer bestimmten Panzerstahlsorte eine Wanddicke t und ein Flächengewicht w auf. Dieses Blechformteil A wird mit einem Schottaufbau aus derselben Panzerstahlsorte verglichen, bei welchem ein Blechformteil B mit einer Wanddicke t₁ und einem Flächengewicht w₁ vor einem Blechformteil C mit einer Wanddicke t₂ und einem Flächengewicht w₂ liegt. Dabei soll gelten, dass die Wanddicke t₁ plus die Wanddicke t₂ gleich der Wanddicke t ist. Dadurch ergibt sich auch, dass das Flächengewicht w₁ plus das Flächengewicht w₂ gleich dem Flächengewicht w des Blechformteils A ist. Bei diesem Vergleich zeigt sich, dass bei dem Schottaufbau aus B und C beispielsweise die Durchschussgrenze eines 5,56 x 45 mm M193 Weichkerngeschosses um fast 80 m/s gegenüber A gesteigert wird. Folglich erzielt der Schottaufbau aus den Blechformteilen B und C bei gleicher Wanddicke und gleichem Flächengewicht eine höhere Beschusssicherheit als das Blechformteil A. Daher kann die Summe der jeweiligen Blechdicke t₁ und t₂ und damit auch die Summe des Flächengewichts w₁ und w₂ der Blechformteile B und C bei gleichbleibender Beschusssicherheit gegenüber der Wanddicke t und dem Flächengewicht w des Blechformteils A verringert werden.

Vergleicht man den gerade beschriebenen Schottaufbau aus Panzerstahl mit einem Schottaufbau aus Stahl und Faserverbundplatten, so ist der Schottaufbau aus Stahl und Faserverbundplatten bei gleicher Beschussperformance fast doppelt so dick und mit einem höheren Flächengewicht ausgestattet, wodurch der Einsatz in zivilen Fahrzeugen nahezu ausgeschlossen ist.

Bevorzugt besteht das vordere Blechformteil aus einem Panzerstahl mit höherer Härte und das hintere Blechformteil aus einem Panzerstahl mit einer geringeren Härte. Durch eine entsprechend große Härte des vorderen Blechformteils können die Kerne von Hartkernmunition gebrochen werden. Gleichzeitig existiert jedoch das Phänomen, dass eben diese Stähle mit hoher Härte, die zum Stoppen von Hartkerngeschossen ausgelegt sind, bei Weichkerngeschossen mit geringem Geschossdurchmesser und hoher Geschwindigkeit Durchschüsse zeigen. Dann wird das Weichkerngeschoss von dem hinteren Blechformteil gestoppt, wobei es vorteilhaft ist, wenn das hintere Blechformteil durch die geringere Härte eine höhere Duktilität zum Energieverzehr aufweist.

Bei einer anderen bevorzugten Ausführungsform ist das vordere Blechformteil dünner als das hintere Blechformteil. Typischerweise dient das vordere Blechformteil als Schott, welches die Wucht des Geschosses mildert, und das hintere Blechformteil als stabileres Trägermaterial.

Die Kombination der zumindest abschnittsweise identisch konfigurierten Blechformteile aus Panzerstahl, die in kongruenter Zuordnung hintereinander gelegt sind, kann auf der Rückseite gegen Splitterabgang einen Liner aus Faserverbundwerkstoffen enthalten. Ein besonderer Vorteil der Erfindung ist, dass auch mehr als zwei Blechformteile hintereinander gelegt werden können. Dadurch kann ein identischer Grundaufbau durch weitere Blechformteile für eine höhere Beschussklasse aufgerüstet werden.

Typischerweise werden die Blechformteile separat geformt, gegen Korrosion geschützt und anschließend miteinander gefügt, und zwar in der Regel verklebt. Alternativ können die Blechformteile aber auch miteinander verschweißt oder verlötet sein. Bevorzugt wird der Abstand zwischen den Blechformteilen möglichst gering gehalten, um die Beschussperformance gegenüber Hartkerngeschossen nicht zu verschlechtern.

Bevorzugt werden die Blechformteile in einem Warmformprozess warm umgeformt und im Werkzeug gehärtet. Beide Bauteile können in einem Werkzeug und einem Umformschritt zusammen umgeformt und gehärtet werden. Zum einen werden dabei ein separates Werkzeug und/ oder ein separater Arbeitsgang vermieden, zum anderen ist ein passgenaues Verbauen der Blechformteile mit einem technischen Nullspalt möglich. Die Blechformteile können flächig oder punktuell verklebt oder auch durch einen Punktschweißprozess punktuell zueinander fixiert werden.

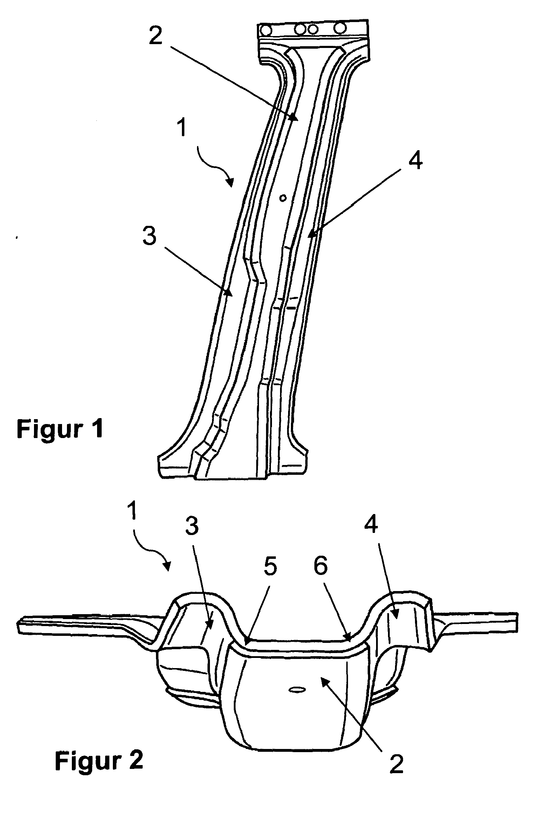

Nachfolgend ist die Erfindung anhand der beiden Figuren 1 und 2 näher beschrieben.
Figur 1 zeigt eine B- Säule (1) in Draufsicht, so wie sie in das Fahrzeug eingebaut wird.
Figur 2 zeigt die B- Säule (1) aus Figur 1 um 90° aus der Bildebene heraus nach vorne gekippt.

Die B- Säule (1) ist aus einer Panzerstahlsorte warm geformt und werkzeuggehärtet worden. Vor die B- Säule (1) ist fast über ihre gesamte Längserstreckung in ihrem mittleren Bereich ein Doppler (2) gelegt, der ebenfalls aus Panzerstahl besteht. Der Doppler (2) ist ein zu dem mittleren Teil der B- Säule (1) identisch konfiguriertes Blechformteil (2), das aber insgesamt kleiner ausfällt, weil es die Seitenbereiche (3) und (4) der B- Säule (1) nicht abdeckt. Es schützt jedoch speziell die Hauptauftreffzone und die kritischen Biegeradien (5, 6) zu den Seitenbereichen (3) und (4). Sowohl die B- Säule (1) als auch der Doppler (2) sind gleichzeitig in einem Schritt warm geformt und im Werkzeug gehärtet worden. Sie passen daher exakt übereinander. Das vordere Blechformteil (2) weist speziell zum Brechen von Hartkernmunition eine größere Härte auf als die B- Säule (1). Die erfindungsgemäß gepanzerte B- Säule (1) zeichnet sich durch ein relativ geringes Flächengewicht bei guter Beschussperformance aus.

## Patentansprüche

1. Panzerung für ein Fahrzeug,
**dadurch gekennzeichnet,**
**dass** mindestens zwei separate zumindest abschnittsweise identisch konfigurierte Bleche oder Blechformteile aus Panzerstahl (1, 2) in kongruenter Zuordnung hintereinander gelegt sind.

2. Panzerung nach Anspruch 1,
**dadurch gekennzeichnet,**
**dass** die Bleche oder Blechformteile miteinander gefügt sind.

3. Panzerung nach einem der vorangehenden Ansprüche,
**dadurch gekennzeichnet,**
**dass** das der Beschussrichtung zugewandte vordere Blech oder Blechformteil (2) kleiner ist als das hintere Blech oder Blechformteil (1).

4. Panzerung nach einem der vorangehenden Ansprüche,
**dadurch gekennzeichnet,**
**dass** das vordere Blech oder Blechformteil (2) eine größere Härte aufweist als das hintere Blech oder Blechformteil (1).

5. Panzerung nach einem der vorangehenden Ansprüche,
**dadurch gekennzeichnet,**
**dass** das vordere Blech oder Blechformteil eine geringere Wandstärke aufweist als das hintere Blech oder Blechformteil.

6. Panzerung nach einem der vorangehenden Ansprüche,
**dadurch gekennzeichnet,**
**dass** beide Bleche oder Blechformteile (1, 2) warmgeformt und werkzeuggehärtet sind.

7. Panzerung nach einem der vorangehenden Ansprüche,
**dadurch gekennzeichnet,**
**dass** das hintere Blech oder Blechformteil auf der der Beschussrichtung abgewandten Seite einen Liner aus Faserverbundwerkstoffen aufweist.

8. Verfahren zum Herstellen einer Panzerung nach einem der vorangehenden Ansprüche,
**dadurch gekennzeichnet,**
**dass** beide Bleche oder Blechformteile (1, 2) in einem Warmformwerkzeug und einem Umformschritt zusammen geformt und gehärtet werden.
